(19) Europäisches Patentamt
European Patent Office
Office européen des brevets

(11) **EP 3 785 102 B1**

(12) **EUROPEAN PATENT SPECIFICATION**

(45) Date of publication and mention
of the grant of the patent:
**23.10.2024 Bulletin 2024/43**

(21) Application number: **19703439.0**

(22) Date of filing: **10.01.2019**

(51) International Patent Classification (IPC):
*G06F 3/0481* (2022.01)     *G09B 17/04* (2006.01)

(52) Cooperative Patent Classification (CPC):
**G06F 3/0481; G09B 5/02;** G06F 40/106

(86) International application number:
**PCT/US2019/013053**

(87) International publication number:
**WO 2020/117291 (11.06.2020 Gazette 2020/24)**

(54) **CONTEXT AWARE SKIM-READ FRIENDLY TEXT VIEW**

KONTEXTBEWUSSTE QUERLESEFREUNDLICHE TEXTANSICHT

VUE DE TEXTE À LECTURE-PARCOURS RAPIDE CONVIVIAL SENSIBLE AU CONTEXTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.12.2018 US 201862775196 P**

(43) Date of publication of application:
**03.03.2021 Bulletin 2021/09**

(73) Proprietor: **Google LLC
Mountain View, CA 94043 (US)**

(72) Inventor: **KAWAMOTO, Ken
Mountain View, CA 94043 (US)**

(74) Representative: **Seymour-Pierce, Alexandra
Isobel
Venner Shipley LLP
200 Aldersgate
London EC1A 4HD (GB)**

(56) References cited:
**EP-A2- 0 816 984      US-A1- 2004 080 532
US-A1- 2015 212 712      US-A1- 2017 200 296
US-B1- 9 558 159**

**Description**

BACKGROUND

When users sift through large amounts of content, such as many pages of text reviews about a particular place, they want to frequently switch between skim-reading and detailed reading. For example, users typically want to skim until they find something they're interested in, and read particular content, such as an individual text review, in detail. In skim reading, the user only needs an overview to gain a general feeling of the entire contents. For example, a user can skim-read a number of restaurant reviews to gain a general feeling as to how most people rated the restaurant. During the skim-read, the user can also pick out certain words, and decide based on those words whether they want to read the text is more detail. For example, words such as "terrible service" or "recommended" might stand out during a skim read of a restaurant review. The user does not necessarily care about the rest of the words, such as "I went to this place last Saturday," while skim-reading. When reading in detail, however, such text may be important to provide the full context of the content.

Existing systems provide content in an overview context for skim reading and a detailed reading context for detailed reading. However, such systems do not enable users to quickly switch between the overview context and detailed reading context. For example, one existing system is the 2-page view system. In this system, one page provides an overview context while another page provides the detailed reading context. For example, the overview page may provide a sample of user reviews for a given place, and clicking on any of the samples allows the user to see the full original review in detail. Because the overview page is only a sampled representation of all of the available contents, it gives the user the impression that they're missing the overall picture. Moreover, the user needs to actively switch between the two pages, often by tapping. This gives high mental fatigue, making it hard to switch between the overview context and detailed context quickly and smoothly.

Another example of an existing system is word clouds, which provides a cloud of "important" words that appeared in the original content, where words may be extracted via various well-known algorithms for word-importance scoring. The clouds give a glanceable way for users to understand the overall picture of all the contents. Clicking on individual words may lead to a second page that show individual contents that contained the given word. However, this suffers the same drawbacks as the 2-page system.

Yet another example of an existing system includes highlighting important words directly within the individual contents. For example, if a user types words into a search tool, those words may be highlighted within the text they were found in. This has the deficiency that users cannot view the original content in its true form as the original author intended, as the styling is defaced.

US 2015/0212712 relates to a method of displaying navigation information on a screen, e.g. a map, and describes showing less detail of the map as a speed of a pointing device moving the map across the screen increases, and showing more detail at slower speeds. US2004080532 discloses an apparatus and method for automatically highlighting text in an electronic document based on scrolling speed.

BRIEF SUMMARY

The present disclosure describes a system allowing users to switch between an overview context for skim reading and a detailed reading context quickly and with minimal active interaction. The invention is defined by the independent claims. Further aspects of the invention are outlined in the dependent claims.

One aspect of the disclosure provides a method for automatically displaying content in a context selected based on passive user cues. The method includes identifying, with one or more processors, most important portions of the content, detecting, with the one or more processors, passive cues of the user, determining, with the one or more processors, a viewing context based on the passive cues of the user, wherein potential viewing contexts include a first overview context wherein the most important portions of the content are displayed, and a detailed reading context wherein the content is displayed in its entirety, and providing, with the one or more processors, the content for display in the determined viewing context.

Identifying the most important portions of the content may include generating a library of words in the content, and assigning an importance value to each word. The importance value may be based on at least one of a frequency of appearance of the word or subject matter of the content.

According to some examples, detecting the passive cues of the user may include detecting a speed at which the user is scrolling through the content. The method may further include assigning a detailedness score based on the detected speed, wherein determining the viewing context is based at least in part on the detailedness score. The method may further include computing a visibility score based on the detailedness score and the identified most important portions. According to other examples, wherein detecting the passive cues of the user may include detecting a gaze of the user, detecting the gaze may include determining an amount of time during which the user's gaze is focused on the content.

Determining the viewing context may include inferring an intent of the user based on the passive cues, and determining the viewing context based on the inferred intent.

According to some examples, the potential viewing contexts may further include a second overview context, in which the most important portions of the content are displayed in their original form and remaining portions of the content are displayed with transparency.

Another aspect of the disclosure provides a system for automatically displaying content in a context based on passive user cues. The system includes one or more memories, and one or more processors in communication with the one or more memories. The one or more processors are configured to identify most important portions of the content, detect passive cues of the user, determine a viewing context based on the passive cues of the user, wherein potential viewing contexts include a first overview context wherein the most important portions of the content are displayed, and a detailed reading context wherein the content is displayed in its entirety, and provide the content for display in the determined viewing context.

According to some examples, in identifying the most important portions of the content, the one or more processors are further configured to generate a library of words in the content, and assign an importance value to each word. The importance value may be based on at least one of a frequency of appearance of the word or subject matter of the content.

Detecting the passive cues of the user may include detecting a speed at which the user is scrolling through the content. For example, the one or more processors may be further configured to assign a detailedness score based on the detected speed, wherein determining the viewing context is based at least in part on the detailedness score. Further, the one or more processors may be further configured to compute a visibility score based on the detailedness score and the identified most important portions. Detecting the passive cues of the user may alternatively or additionally include detecting gaze of the user.

Determining the viewing context may include inferring an intent of the user based on the passive cues, and determining the viewing context based on the inferred intent. The potential viewing contexts may further include a second overview context, in which the most important portions of the content are displayed in their original form and remaining portions of the content are displayed with transparency.

Yet another aspect of the disclosure provides a non-transitory computer-readable medium storing instructions executable by one or more processors for performing a method of automatically displaying content in a context inferred based on passive user cues, including identifying most important portions of the content, detecting passive cues of the user, determining a viewing context based on the passive cues of the user, wherein potential viewing contexts include a first overview context wherein the most important portions of the content are displayed, and a detailed reading context wherein the content is displayed in its entirety, and providing the content for display in the determined viewing context.

## BRIEF DESCRIPTION OF THE DRAWINGS

Fig. 1 is a pictorial diagram of an example system according to aspects of the disclosure.

Fig. 2 is a block diagram of the example system of Fig. 1.

Fig. 3 illustrates screenshots of an example transition between a detailed reading context and a first overview context according to aspects of the disclosure.

Fig. 4 illustrates screenshots of an example transition between a second overview context and the first overview context according to aspects of the disclosure.

Fig. 5 illustrates screenshots of an example transition between the second overview context and the detailed reading context according to aspects of the disclosure.

Fig. 6 illustrates an example library of words ranked by importance according to aspects of the disclosure.

Fig. 7 illustrates a context detection unit according to aspects of the disclosure.

Fig. 8 is a flow diagram illustrating an example method according to aspects of the disclosure.

## DETAILED DESCRIPTION

### Overview

The present disclosure provides a text display system that switches seamlessly between an overview mode and a detailed view mode, depending on passive signals from the user. Accordingly, users can switch between the overview and detailed context using interactions that they use naturally. When looking for interesting things to read, they can naturally scroll fast and be able to see only the important topics of the contents. This allows them to capture the gist of all of the contents, and also quickly find contents that they may be interested in reading further. When they slow down the scrolling, the content will be presented in its original form without highlighting, so the user will be able to consume the content in the true form that the author created. Since there is no active interaction required other than the natural scrolling that users would do anyway, there is no mental hurdle in switching between the overview and detailed contexts, allowing users to find and consume content quickly. In this manner, an improved ability for user to control the operation of the system may be provided; for example, control over the form in which content is displayed can be achieved without interrupting other functions (such as scrolling). The approach of the present disclosure is also well suited to allowing reversible changes between operating modes in response to changes in context.

The system may include a content scorer, a context detector, and a user interface. The content scorer scores the relative importance of parts of each content, such as the importance of each word in a restaurant review text, or parts of a photo that show the central object of the photo. The user context detector classifies the intent of the user. For example, the context detector may determine whether the user wants to see the overview or the details of an individual content. The determination may be based on, for example, how quickly the user is scrolling through the content. The user interface displays the individual content with only the important parts highlighted when it is determined that the user wants to see the overview, and displays the individual content in its original form when the user is classified as wanting to see details.

The content scorer may perform text scoring, such as by using term frequency-inverse document frequency (tf-idf) to generate a library of words mapped to their relative importance. Every word that appears in a text content may have a score based on how interesting it may be to a user. According to some examples, the score may be a numeric value, such as a number ranging from [0.0-1.0]. In another implementation, importance scores may be manually assigned to particular parts of the content. For example, where the content is a business review, details such as a username or image of the content author may be assigned a lower importance score so that they will be hidden when the user is skimming through content.

The user context detector may map the scrolling speed at any point in time to a number representing the user's willingness to read individual details. For example, a scrolling speed of 0dp/sec, where dp is a unit of measurement of distance on a display, may be linearly mapped to detailedness of 1, where 1 represents a maximum detailedness level. A scrolling speed of 30dp/sec, for example, may be mapped to detailedness of 0, where it would be inferred that the user only wants to see the overview of contents. Any scrolling speed between 0dp/sec and 30dp/sec may correlate to a level of detailedness based on a function.

The user interface may emphasize important parts of the content, and de-emphasize non-important parts, when the detailedness score is low. In one implementation, all words may be classified as either important and not important. For example, the top 5% of words in the library may be defined to be important, and all else not important. All not important words may be made transparent based on the detailedness score, so that when the detailedness is 1, the transparency of not important words are at the level of the original content, whereas when the detailedness is 0, the not important words are fully transparent but important words are still fully visible.

In addition to switching back and forth between overview and detailed view for text content, the same may be performed for other types of content, such as that including maps, graphs, charts, pictures, etc.

Example Systems:

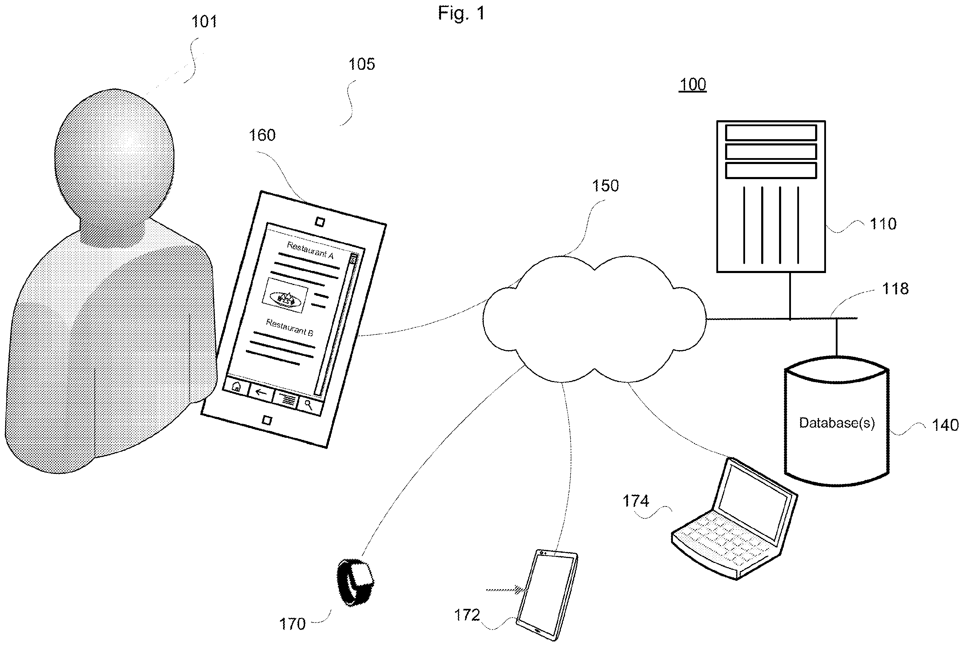

FIG. 1 illustrates an example system 100 including computing devices for performing aspects of the present disclosure. The system 100 includes various client computing devices 160, 170-174 communicatively coupled to a server computing device 110 through a network 150. User 101 uses computing device 160 to view content, such as web pages. The client computing device 160 may display the content in an overview context or in a detailed reading context based on an intent of the user 101 inferred from the user's passive/natural interactions, such as scrolling speed, eye movement, etc. The context, and how it is presented, may be determine by one or both of the client computing device 160 and/or the server computing device 110.

The client computing devices 160, 170-174 may include any of a variety of types of devices capable of capturing images and communicating over a network. By way of example and not limitation, such devices may include smartphones, cameras with wireless network access, laptops, smartwatches, tablets, head-mounted displays, gaming systems, etc. Each client computing device may include, for example, user input devices such as cameras, microphones, joysticks, buttons, touch screens, etc., as well as a display, which could include, for instance, an LED, LCD, plasma screen, projector, etc.

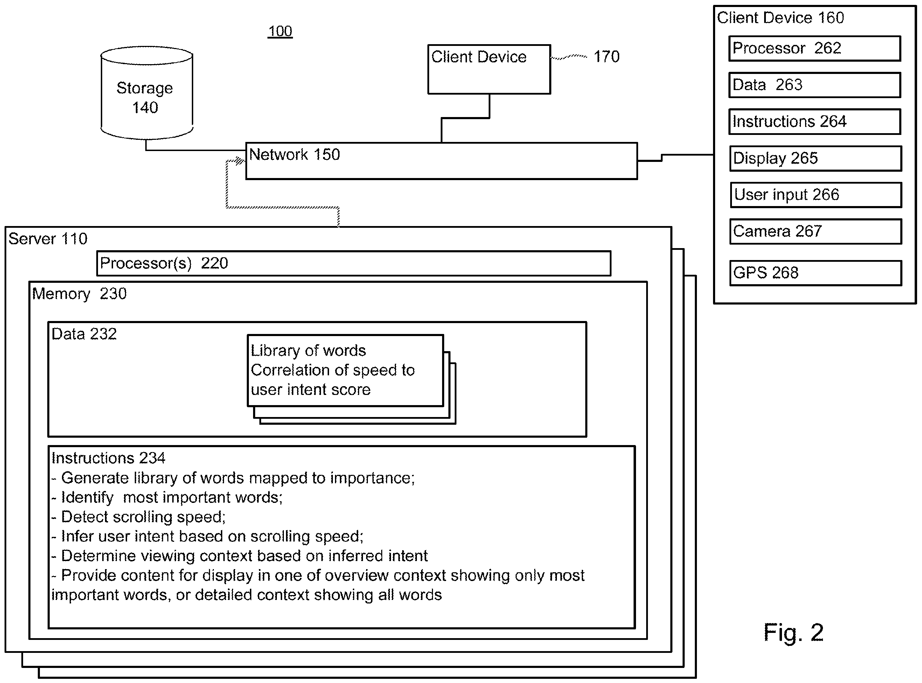

The server computing device 110 may actually include a plurality of processing devices in communication with one another. The server computing device 110 is described in further detail in connection with Fig. 2 below.

Databases 140 may be accessible by the server 110 and client computing devices 160, 170-174. The databases 140 may include, for example, a collection of imagery from various sources, such as still images, video clips, or other types of imagery. The database may also include other types of content, such as web pages, etc.

These network 150 may be, for example, a LAN, WAN, the Internet, etc. The connections between devices and the network may be wired or wireless.

While in this example, and in other examples throughout the disclosure, the content provided in different contexts includes reviews of businesses, it should be understood that the transitioning between an overview context and a detailed reading context may be applied to any of a variety of other types of content, such as any content with text, images, graphics, or other information. By way of example only, the modes can be applied to different types of search results, web pages, news articles, e-books, photo storage applications, analytics, etc.

Fig. 2 illustrates further details of components in the example system 100. It should not be considered as limiting the scope of the disclosure or usefulness of the features described herein. Each of the server computing devices 110 can contain one or more processors 220, memory 230 and other components typically present in general purpose computing devices. Memory 230 of each computing device 110 can store information accessible by the one or more processors 220, including instructions 234 that can be executed by the one or more processors 220.

Memory 230 can also include data 232 that can be retrieved, manipulated or stored by the processor. The memory can be of any non-transitory type capable of storing information accessible by the processor, such as a hard-drive, memory card, ROM, RAM, DVD, CD-ROM, write-capable, and read-only memories.

The instructions 234 can be any set of instructions to be executed directly, such as machine code, or indirectly, such as scripts, by the one or more processors. In that regard, the terms "instructions," "application," "steps," and "programs" can be used interchangeably herein. The instructions can be stored in object code format for direct processing by a processor, or in any other computing device language including scripts or collections of independent source code modules that are interpreted on demand or compiled in advance. Functions, methods, and routines of the instructions are explained in more detail below.

Data 232 may be retrieved, stored or modified by the one or more processors 220 in accordance with the instructions 234. For instance, although the subject matter described herein is not limited by any particular data structure, the data can be stored in computer registers, in a relational database as a table having many different fields and records, or XML documents. The data can also be formatted in any computing device-readable format such as, but not limited to, binary values, ASCII or Unicode. Moreover, the data can comprise any information sufficient to identify the relevant information, such as numbers, descriptive text, proprietary codes, pointers, references to data stored in other memories such as at other network locations, or information that is used by a function to calculate the relevant data.

The one or more processors 220 can be any conventional processors, such as a commercially available CPU. Alternatively, the processors can be dedicated components such as an application specific integrated circuit ("ASIC") or other hardware-based processor. Although not necessary, one or more of computing devices 110 may include specialized hardware components to perform specific computing processes, such as image matching, image editing, object recognition, or performing other processes faster or more efficiently.

Although Fig. 2 functionally illustrates the processor, memory, and other elements of computing device 110 as being within the same block, the processor, computer, computing device, or memory can actually comprise multiple processors, computers, computing devices, or memories that may or may not be stored within the same physical housing. For example, the memory can be a hard drive or other storage media located in housings different from that of the computing devices 110. Accordingly, references to a processor, computer, computing device, or memory will be understood to include references to a collection of processors, computers, computing devices, or memories that may or may not operate in parallel. For example, the computing devices 110 may include server computing devices operating as a load-balanced server farm, distributed system, etc. Yet further, although some functions described below are indicated as taking place on a single computing device having a single processor, various aspects of the subject matter described herein can be implemented by a plurality of computing devices, for example, communicating information over network 150.

Each of the computing devices 110, 160, 170 can be at different nodes of a network 150 and capable of directly and indirectly communicating with other nodes of network 150. Although only a few computing devices are depicted in Fig. 2, it should be appreciated that a typical system can include a large number of connected computing devices, with each different computing device being at a different node of the network 150. The network 150 and intervening nodes described herein can be interconnected using various protocols and systems, such that the network can be part of the Internet, World Wide Web, specific intranets, wide area networks, or local networks. The network can utilize standard communications protocols, such as Ethernet, WiFi and HTTP, protocols that are proprietary to one or more companies, and various combinations of the foregoing. Although certain advantages are obtained when information is transmitted or received as noted above, other aspects of the subject matter described herein are not limited to any particular manner of transmission of information.

As an example, each of the computing devices 110 may include web servers capable of communicating with storage system 140 as well as computing devices 160, 170 via the network 150. For example, one or more of server computing devices 110 may use network 150 to transmit and present information to a user on a display, such as display 265 of computing device 160. In this regard, computing devices 160, 170 may be considered client computing devices and may perform all or some of the features described herein.

Each of the client computing devices 160, 170 may be configured similarly to the server computing devices 110, with one or more processors, memory and instructions as described above. Each client computing device 160, 170 may be a personal computing device intended for use by a user, and have all of the components normally used in connection with a personal computing device such as a processor 262, memory (e.g., RAM and internal hard drives) storing data 263 and instructions 264, a display 265, and user input 266. The client computing device may also include a camera 267 for recording video streams and/or capturing images, speakers, a network interface device, and all of the components used for connecting these elements to one another. The client computing device 160 may also include a location determination system, such as a GPS 268. Other examples of location determination systems may determine location based on wireless access signal strength, images of geographic objects such as landmarks, semantic indicators such as light or noise level, etc.

Although the client computing devices 160, 170 may each comprise a full-sized personal computing device, they may alternatively comprise mobile computing devices capable of wirelessly exchanging data with a server over a network such as the Internet. By way of example only, client computing device 160 may be a mobile phone or a device such as a wireless-enabled PDA, a tablet PC, a netbook, a smart watch, a head-mounted computing system, or any other device that is capable of obtaining information via the Internet. As an example the user may input information using a small keyboard, a keypad, microphone, using visual signals with a camera, or a touch screen.

As with memory 230, storage system 140 can be of any type of computerized storage capable of storing information accessible by the server computing devices 110, such as a hard-drive, memory card, ROM, RAM, DVD, CD-ROM, write-capable, and read-only memories. In addition, storage system 140 may include a distributed storage system where data is stored on a plurality of different storage devices which may be physically located at the same or different geographic locations. Storage system 140 may be connected to the computing devices via the network 150 as shown in Fig. 1 and/or may be directly connected to any of the computing devices 110.

Storage system 140 may store data, such as various types of content available for viewing on one of the client devices 160, 170. According to some examples, the storage system 140 may also store a library of words ranked by importance. The importance of each word in the library may vary based on the content in which it appears. For example, a word such as "service" may be ranked higher with respect to other words in a restaurant review than in a catalog of dinnerware and flatware.

According to some examples, the library of words may be stored in the memory 230 as data. The data may also include a correlation of user cues to intended viewing context. For example, the data may include a correlation of scrolling speed, eye movement, or other natural/passive cues to a value. The values may be used to define the user's intent. For example, an intent to view content in a first overview mode may be defined by a first range of values, an intent to view the content in a second overview mode may by defined by a second range of values, and an intent to view the content in a detailed reading mode may be defined by a third range of values.

The one or more processors 220 may perform one or more operations for displaying the content in the user's desired mode. According to some examples, the processor 262 in the client device 160 may perform some or all of such operations. Such operations may include, for example, generating the library of words, with each word mapped to an importance value, and identifying the most important words for the content. The operations may further include detecting user natural/passive cues, such as scrolling speed, and inferring the user's intent based on the natural/passive cues. In this regard, though not shown, the system may further include a context detection unit. For example, the context detection unit may reside at either or both of the client device 160 and the server 110. The context detection unit may include the one or more processors 262 or 230, as well as other components, such as the camera 267, GPS 368, user input 266, etc. Such unit may provide information as to an activity the user is performing, such as scrolling, walking, talking, riding a bike, or any other activity that may affect a speed at which the user can read. The viewing context may be determined based on the inferred intent, and the content may be provided for display in the determined viewing context.

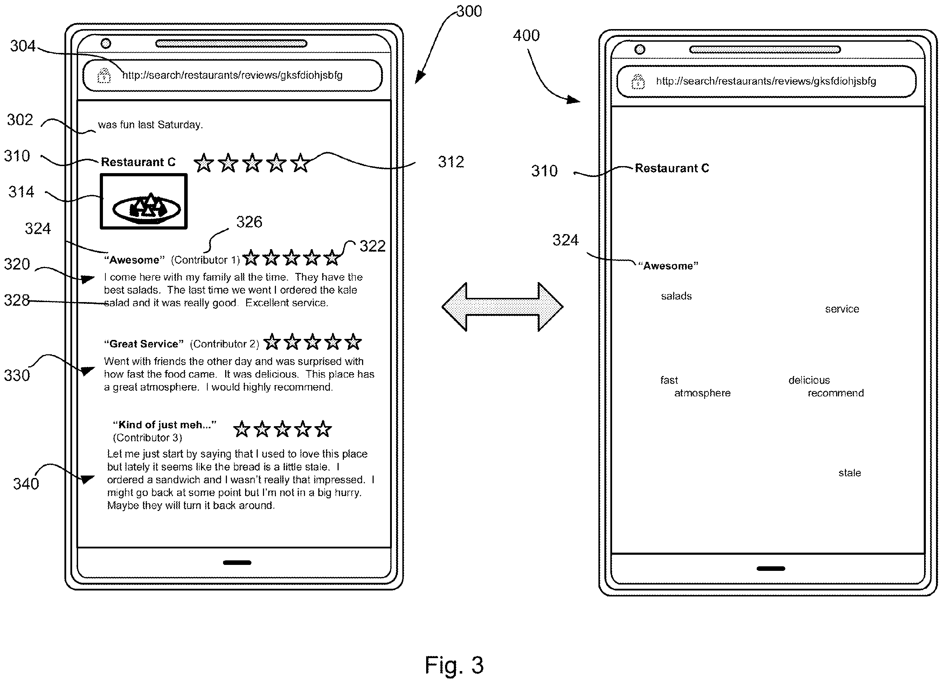

Fig. 3 illustrates screenshots of an example transition between a detailed reading context 300 and a first overview context 400. While in this example the content relates to restaurant reviews, it should be understood that the techniques described herein may be applied to any types of content, including any content with text, images, graphics, etc. In each of the detailed reading context 300 and the first overview context 400, the content displayed relates to content of the same web page available at address 304. For example, the web page may include a collection of search results or any other information. The detailed reading context 300 may be displayed if, for example, the user is not scrolling or is scrolling very slowly, at a pace indicating that the user is attempting to read each word. According to other examples the detailed reading context 300 may be displayed based on detected eye movement of the user, such as eye movements indicating that the user is attempting to read all or most of the words. However, if the user begins scrolling quickly, such as with a brisk swipe up on a touchscreen, the display may automatically switch to the first overview context 400. While the same content is shown in the first overview context 400 for comparison to the detailed reading context 300, the screen may actually be scrolling quickly, and therefore the content shown would move off the screen quickly and be replaced by new content.

In the detailed reading context 300, all information of the web page in its authentic state is displayed. For example, as shown, such information includes a portion 302 of a previous review, and a section 310 of reviews related to "Restaurant C." Such section 310 includes an overall rating 312, which may be an average or other combination of individual ratings provided in individual reviews, and one or more images 314, such as images of the restaurant, of food served at the restaurant, etc. In the section 310 is also a plurality of individual reviews 320, 330, 340 from individual contributors. Each review may include, for example, a title 324, an identification 326, such as a user name or the like, of the contributor, a rating 322, and a description 328. It should be understood that this is merely an example, and that other types of reviews or other types of content may have a different format.

In the first overview context 400, only some portions of the content are displayed and the rest are transparent. In this example, the undisplayed portions are completely transparent, such that they are not visible, though in other examples they may be displayed with a different degree of transparency. Accordingly, in some examples, in the first overview context the most important portions of the context may be displayed while display of other portions of the content may be restricted partially or completely.

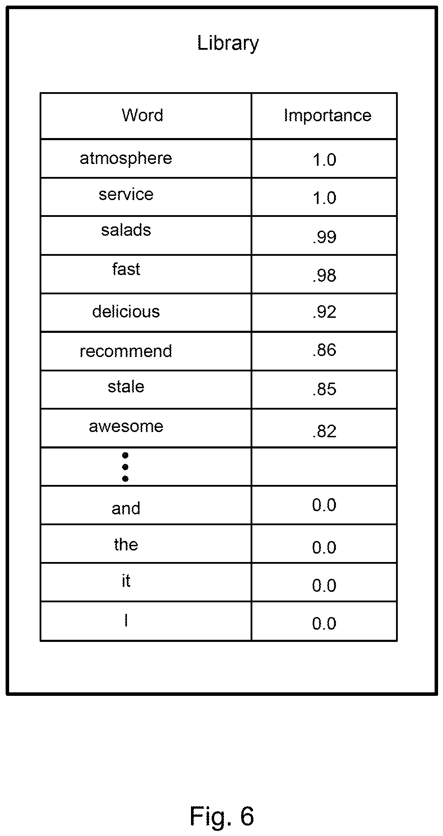

In the example of Fig 3, the portions of the content displayed in the first overview context 400 include a number of words having a highest importance. For example, each word in the content may be ranked according to its importance, as further described below in connection with Fig. 6. The words may be from different reviews 320-340, and a number of words selected from each review may be the same or different. For example, some reviews may not have any important words, and therefore no words for such review would be displayed in the first overview context 400. Moreover, the important words may be from any portion of the reviews. For example, the title 324 of the review 320 is shown, but the titles for other reviews are not shown, because the words in such titles were of lower importance.

The total number of words displayed in the first overview context 400 may depend on, for example, how quickly the user is scrolling or skim-reading the page. For example, if the user is scrolling through approximately 6 screens per second, and typical users can read approximately 60 words per second, then approximately 10 words may be displayed on each screen. While the images 31 and review 312, 322 were not shown in the first overview context 400, in other example some images and graphics may be displayed. The display of graphics may depend on, for example, the type of content displayed, such as whether it is reviews, search results, news, etc., a composition of the content displayed, such as whether it is primarily images and graphics or primarily text, user defined settings, or any other information.

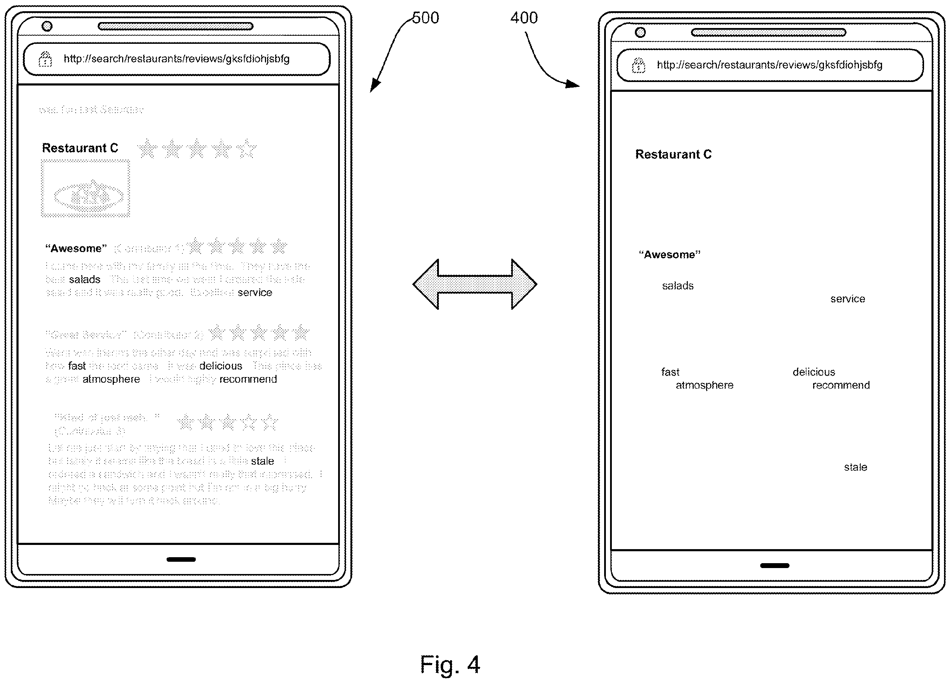

Fig. 4 illustrates screenshots of an example transition between a second overview context 500 and the first overview context 400. In the second overview context 500, for example, the words displayed in the first overview context 400 may be displayed in their normal state, while the remaining content is displayed with a degree of transparency. The transparency of such remaining content is at a lesser degree than that of the first overview context 400, where it is fully transparent. Rather, in the second overview context 500, the remaining content can be faintly seen.

The second overview context 500 may be displayed if, for example, the user is scrolling slower than a maximum speed, for which the first overview context 400 would be displayed, but faster than a normal reading pace, for which the detailed reading context 300 (Fig. 3) would be displayed. According to some examples, the degree of transparency may be proportional to the scrolling speed or reading speed of the user. For example, the faster the user scrolls, the more transparent the remaining content may become. As the scrolling speed slows, the remaining content may become more visible.

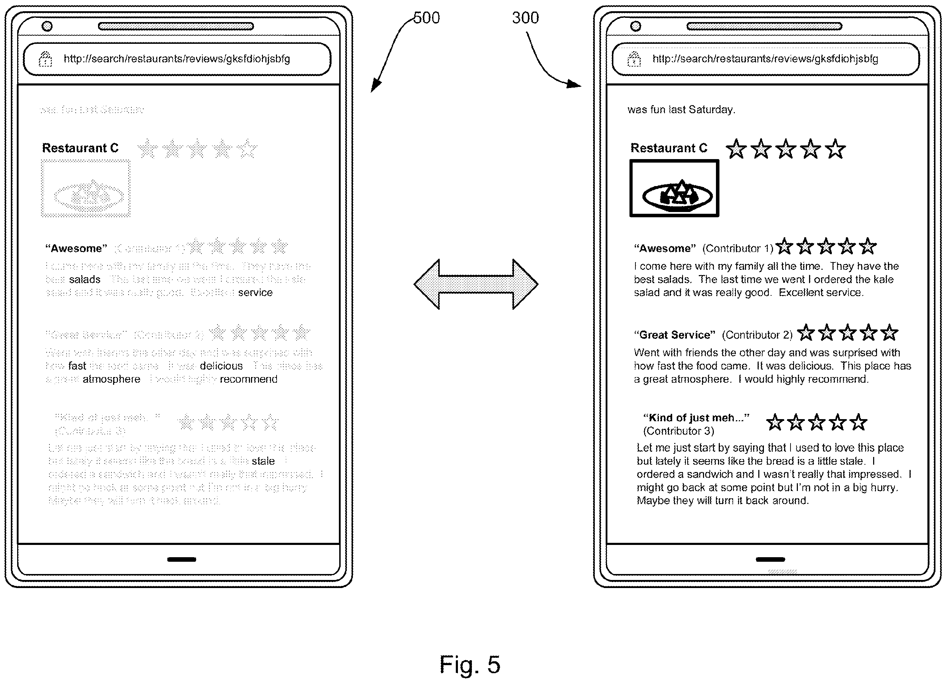

Fig. 5 illustrates screenshots of an example transition between the second overview context 500 and the detailed reading context 300. Such transition may occur automatically, for example, when the user's scrolling slows down. While the same content is illustrated in each context for comparison, it should be understood that the content may actually move off the screen and be replaced by new content.

While the examples of Figs. 3-5 illustrate altering the transparency of less important words or features, on other examples visibility may be altered in other ways. For example, other attributes of styling, such as color, brightness, relative contrast to the background, bolding, font size, etc. may be used to alter the relative visibility of important words and features.

Fig. 6 illustrates an example of the library of words ranked by importance. For example, every word that appears in a text content may have a score based on how interesting it may be to a user. The score may be based on any of a variety of parameters, such as frequency of appearance, field within the context in which it appears, subject matter of the content, etc. For example, text that appears within a user identifier field (e.g., identifier 326 of Fig. 3) may be attributed a lower importance than text that appears within a description field (e.g., description 328 of Fig. 3). Similarly, a title field (e.g., title 324 of Fig. 3) may be attributed greater importance. Further, where the subject matter of the content relates to restaurant review, such as in Fig. 3, words of particular interest in such subject matter may be assigned a greater importance that they would in other subject matters.

According to some examples, term frequency inverse document frequency (tf-idf) to generate a library of words mapped to their relative importance. The score may be a numeric value, such as a number ranging from [0.0-1.0], as shown in Fig. 6. In other examples, the score may be a numeric value in a different range, a percentage, a non-numeric value, or any other type of value.

In addition to or in the alternative to text, other information such as objects, images, graphics may also have an overview context and a detailed context. The elements shown in each context may be based on, for example, manual user input, computed scores, or other information. For example, scores may be based on machine learning input detecting portions of content most relevant to viewers. As an example of the different types of content, maps may show different contents depending on the user's required level of detail. When the user is panning a viewport of the map, the display may show only user interface elements that give an overview of the place. As an example, such elements may include the country name, large natural features like rivers and mountains, etc. When the user stops panning, the display may show more detailed labels, such as the city name, tourist attractions, restaurant names, etc. As another example of other types of content, for graphs in an overview context, only overall data may be shown, such as a trend graph of a scatter plot. In a detailed context, all other elements of the graph, such as the axis labels, individual data points, etc. may be shown. As yest another example type of content, photographs may also be altered in overview context as compared to detailed context. For example, in a gallery of photos, in the overview context, only the foreground object in the photo may be shown in color, while the background is shown in grayscale. In the detailed view, the full photograph may be shown in color.

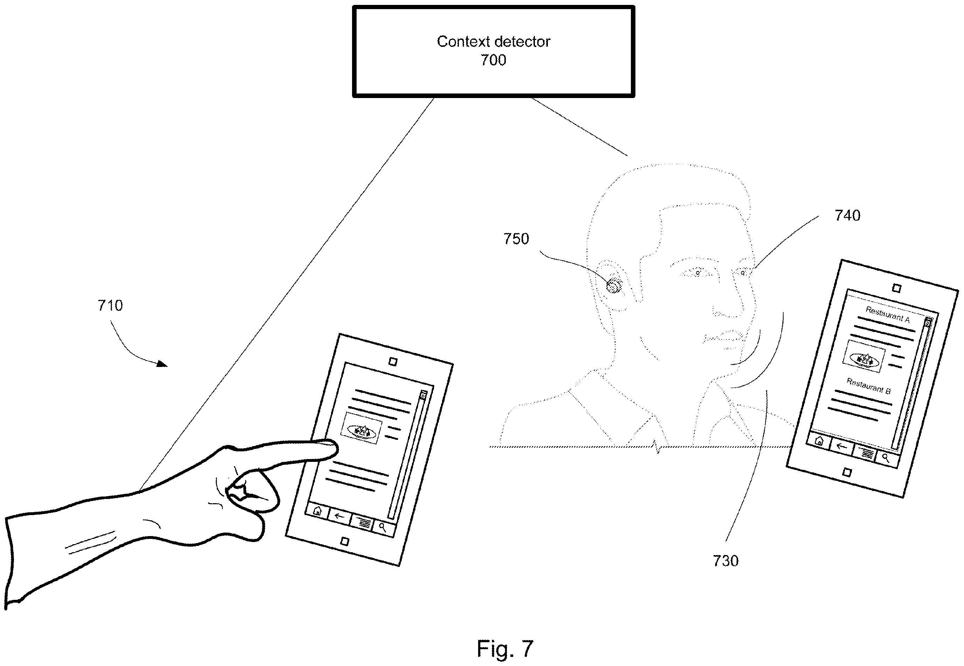

Fig. 7 illustrates an example context detection unit 700. The context detection unit 700 may include, for example, the one or more processors of the client device and/or of one or more servers. According to some examples, it may also include input features of the client device, such as touch screen input, voice input, electronic connections to other devices, GPS location, accelerometer data, camera input, etc.

According to one example, the context detection unit 700 may determine a user's desired context based on scrolling speed 710. For example, any scrolling speed between 0dp/sec and 30dp/sec may correlate to a level of detailedness based on a function, such as:

$$detailedness = max(0, 1 - speed/30)$$

According to some examples, the function may have a non-zero intercept. For example, a scrolling speed up to some threshold, such as 5dp/sec, may be deemed to have a detailedness level of 1, because users may scroll slowly while reading content, and still want to be in the detailed view. Such function may be, for example:

$$detailedness = max(0, min(1, 1 - (speed - 5)/30))$$

This function may be computed across an averaged speed over some time, such as, by way of example only, 100ms. Because some scrolling may happen accidentally, such as if a user accidentally touches the screen of a smartphone, computing the averaged speed over time would reduce accidental scrolling. The function, with such averaging, may be:

$$detailedness = max(0, 1 - avg[0<i<100](speed[t-i]) / 30)$$

The visibility of the words may be computed as a function of the detailedness. For example, a maximum detailedness score may produce maximum visibility, such as illustrated in the detailed reading view 300 of Fig. 3. Conversely, a minimum detailedness score may produce minimum visibility of unimportant words or objects, such as shown in the first overview context 400 of Fig. 4. A detailedness score somewhere between the maximum and minimum may result in a context similar to the second overview context 500 of Fig. 4. For example, visibility may be computed as:

$$visibility = if\ importance>=[threshold]\ then\ detailedness,\ else\ 0$$

Accordingly to some other examples, visibility may be computed as a function of importance and detailedness to alter the text visibility:

$$visibility = detailedness * importance$$

Additionally to using screen scrolling speed to infer the user's required detailedness, the context detector 700 may determine the user's desired detailedness based on other natural cues, such as the user's reading speed, the user's activities, user-defined parameters, etc. For example, while performing certain activities, such as walking, talking, eating, etc., users may be less willing or able to view detailed content. Accordingly, as shown in Fig. 7, the context detector 700 detects when the user is performing such an activity, and the detailedness may be adjusted to show summarized content in an overview context accordingly. For example, the context detector 700 may detect a user's voice input 730, or a wireless communication connection between the client device and another device 750. Such input may be used to infer a particular activity of the user. Other possible inputs, though not shown and by way of example only, may include accelerometer input, GPS input, gyroscope input, temperature input, light input, etc. When the user has halted the particular activity, the context view may return to the more detailed reading context.

In another implementation, the user's focus on the screen may be used to infer the desired context. For example, a camera or other device may detect movements of the user's pupils 740, the user's head, or other movements that would indicate the user's gaze. A time during which the user's eyes are focusing on the screen may be used to compute the detailedness of contents shown to the user. As such, for example, users glancing at a phone may see a summary of an email they received, and then view the details by continuing to view the screen. In such examples, and any other example where the device may potentially capture other information of the user, the user will have the ability to authorize such input or disable such input. For example, the user may be required to enable access of a camera for capturing pupil or head movements of the user.

According to some examples, the context detector 700 may also determine context based on user-defined parameters. For example, parameters for setting the visibility may be chosen so that, given a certain model of users' reading speed, users have enough time at their current scrolling speed to read all words visible on the screen. For example, if a typical user can read 3 words per second, and the scrolling speed is such that exactly one screen height's worth is scrolled in exactly one second, then visibility should be controlled such that about 3 most important words appear on the screen. The user may adjust the number of words appearing on one screen, for example, if the user is capable of reading faster or slower than the typical user. This ensures that at whatever scrolling speed, the users can keep reading at the same speed, and never have a situation where words scroll off before they're read by the user.

While a few example activities are illustrated in Fig. 7 for use in detecting the user's desired viewing context, it should be understood that any of a variety of other possible activities may be used to infer the user's intent through natural cues.

Example Methods

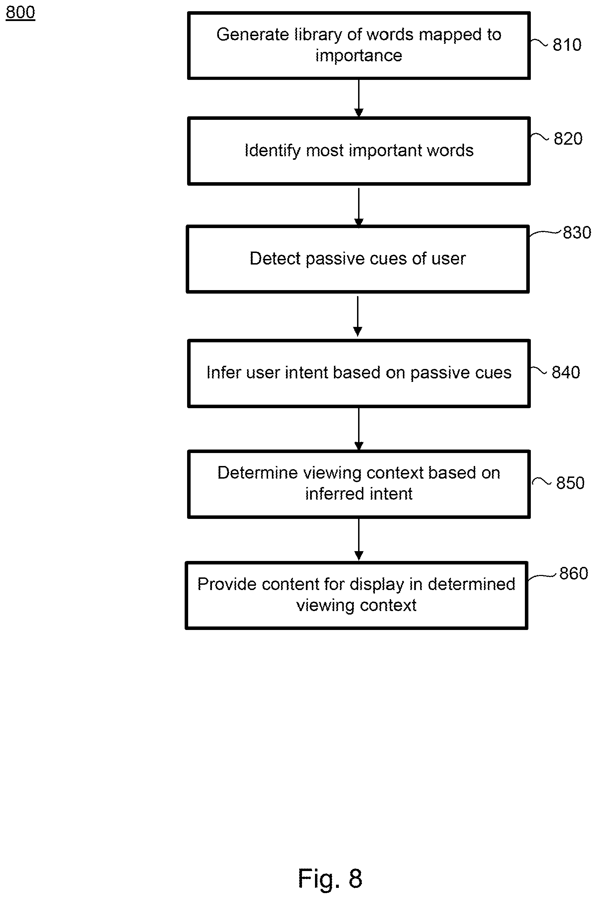

Fig. 8 is a flow diagram illustrating an example method of automatically adapting a view of content based on an inferred reading ability of a user. The method may be performed by, for example, a client computing device and/or a server computing device. While the operations are illustrated and described in a particular order, it should be understood that an order of the operations may be varied. For example, some operations may be performed simultaneously. Further, operations may be added or omitted.

In block 810, a library of important words is generated. For example, each word in the content may be assigned a score based on frequency of appearance, subject matter, or any other parameters. The scores may be, for example, numeric values or any other type of values differentiating the words. The scored words may be added to the library and ranked based on their scores. In examples where the content does not include words, such as in a gallery of pictures, it should be understood that this step may be omitted or modified based on important elements of the contents.

In block 820, the most important words are identified. For example, the highest ranked words may be identified. The number of words identified may be based on, for example, a number of words on a page of the content and/or a user's ability to read the words while scrolling through the content.

In block 830, passive cues of the user are detected. Such passive cues may include, for example, input that the user would naturally enter while reading content, such as scrolling, eye movement, etc. According to some examples, such passive cues may also include activities being performed by the user, such as walking, talking, etc.

In block 840, user intent is inferred based on the passive cues. For example, the user intent may relate to an amount of visual content the user desires to receive. By way of example, of the user is quickly scrolling or only quickly glancing at the display before averting their focus, it may be inferred that the user only desires to get a general overview of the content available for display. Conversely, if the user is not scrolling or is focusing their gaze on the display, it may be inferred that the user wants to read the content in detail.

In block 850, a viewing context is determined based on the inferred intent. For example, when it is determined that the user only desires an overview, then a first overview context may be selected, wherein only the words identified as most important are displayed in a position in which they would normally appear, while other words are removed or grayed or otherwise made less noticeable. If it is inferred that the user wants to see details, then a detailed reading context may be selected. Other contexts, such as a second overview context wherein less information is removed than in the first overview context, may also be selected based on the inferred user intent. In block 860, the content is provided for display in the determined viewing context.

The above techniques are advantageous in that users can switch between viewing the overall picture of contents, and detailed views of individual contents quickly without actively needing to express their context intent. They are able to view the overview within the context of the original content. For example, when they see the word awesome, they can slow down the scrolling to see what the author meant. They are able to view the contents in detail in the true form that they were given by the original author.

Unless otherwise stated, the foregoing alternative examples are not mutually exclusive, but may be implemented in various combinations to achieve unique advantages. As these and other variations and combinations of the features discussed above can be utilized without departing from the subject matter defined by the claims, the foregoing description of the embodiments should be taken by way of illustration rather than by way of limitation of the subject matter defined by the claims. In addition, the provision of the examples described herein, as well as clauses phrased as "such as," "including" and the like, should not be interpreted as limiting the subject matter of the claims to the specific examples; rather, the examples are intended to illustrate only one of many possible embodiments. Further, the same reference numbers in different drawings can identify the same or similar elements.

**Claims**

1. A method for automatically displaying text content in a context based on passive user cues, comprising:

   identifying, with one or more processors (220), most important portions of the text content;
   detecting, with the one or more processors, passive cues of the user (101);
   determining, with the one or more processors, a viewing context based on the passive cues of the user, wherein potential viewing contexts include a first overview context (400) wherein the most important portions of the text content are displayed, and a detailed reading context (300) wherein the text content is displayed in its entirety; and
   providing, with the one or more processors, the text content for display in the determined viewing context;
   wherein detecting the passive cues of the user comprises detecting:

      a speed at which the user is scrolling through the text content, and
      current activities of the user; and

   wherein an amount of the text content displayed in the first overview context is based on the speed at which the user is scrolling and the current activities of the user.

2. The method of claim 1, wherein identifying the most important portions of the text content comprises:

   generating a library of words in the text content; and
   assigning an importance value to each word.

3. The method of claim 2, wherein the importance value is based on at least one of a frequency of appearance of the word or subject matter of the text content.

4. The method of any preceding claim, further comprising assigning a detailedness score based on the detected speed, wherein determining the viewing context is based at least in part on the detailedness score.

5. The method of claim 4, further comprising computing a visibility score based on the detailedness score and the identified most important portions.

6. The method of any one of the preceding claims, wherein detecting the passive cues of the user comprises detecting a gaze of the user.

7. The method of claim 6, wherein detecting the gaze comprises determining an amount of time during which the user's gaze is focused on the text content.

8. The method of any one of the preceding claims, wherein determining the viewing context comprises:

   inferring an intent of the user based on the passive cues; and
   determining the viewing context based on the inferred intent.

9. The method of any one of the preceding claims, wherein the potential viewing contexts further include a second overview context (500), in which the most important portions of the text content are displayed in their original form and remaining portions of the content are displayed with transparency.

10. A system for (100) automatically displaying text content in a context based on passive user cues, comprising:

> one or more memories (230);
> one or more processors (220) in communication with the one or more memories, the one or more processors configured to perform the method of any preceding claim.

11. A non-transitory computer-readable medium storing instructions executable by one or more processors for performing the method of any one of claims 1 to 9.

**Patentansprüche**

1. Verfahren zum automatischen Anzeigen von Textinhalten in einem Kontext basierend auf passiven Benutzerhinweisen, umfassend:

> Identifizieren der wichtigsten Abschnitte des Textinhalts mit einem oder mehreren Prozessoren (220); Erkennen passiver Hinweise des Benutzers (101) mit einem oder mehreren Prozessoren;
> Bestimmen eines Ansichtskontextes mit einem oder mehreren Prozessoren basierend auf den passiven Hinweisen des Benutzers, wobei potentielle Ansichtskontexte einen ersten Übersichtskontext (400), wobei die wichtigsten Abschnitte des Textinhaltes angezeigt werden, und einen detaillierten Lesekontext (300) beinhalten, wobei der Textinhalt in seiner Gesamtheit angezeigt wird; und
> Bereitstellen des Textinhalts mit einem oder mehreren Prozessoren zum Anzeigen in dem festgelegten Ansichtskontext ;
> wobei das Erkennen der passiven Hinweise des Benutzers das Erkennen von Folgendem umfasst:
>
> > einer Geschwindigkeit, mit der der Benutzer durch den Textinhalt scrollt, und der aktuellen Aktivitäten des Benutzers; und
> > wobei eine Menge des in dem ersten Übersichtskontext angezeigten Textinhalts auf der Geschwindigkeit, mit der der Benutzer scrollt, und den aktuellen Aktivitäten des Benutzers basiert.

2. Verfahren nach Anspruch 1, wobei das Identifizieren der wichtigsten Abschnitte des Textinhalts Folgendes umfasst: Erzeugen einer Bibliothek von Wörtern in dem Textinhalt; und Zuweisen eines Bedeutungswertes zu jedem Wort.

3. Verfahren nach Anspruch 2, wobei der Bedeutungswert auf mindestens einer von einer Häufigkeit des Auftretens des Wortes oder der Thematik des Textinhalts basiert.

4. Verfahren nach einem der vorhergehenden Ansprüche, ferner umfassend das Zuweisen einer Detailliertheitsbewertung basierend auf der erkannten Geschwindigkeit, wobei das Bestimmen des Ansichtskontextes mindestens teilweise auf der Detailliertheitsbewertung basiert.

5. Verfahren nach Anspruch 4, ferner umfassend Berechnen einer Sichtbarkeitsbewertung basierend auf der Detailliertheitsbewertung und den identifizierten wichtigsten Abschnitten.

6. Verfahren nach einem der vorhergehenden Ansprüche, wobei das Erkennen der passiven Hinweise des Benutzers das Erkennen eines Blicks des Benutzers umfasst.

7. Verfahren nach Anspruch 6, wobei das Erkennen des Blicks das Bestimmen einer Zeitspanne umfasst, in der der Blick des Benutzers auf den Textinhalt gerichtet ist.

8. Verfahren nach einem der vorhergehenden Ansprüche, wobei das Bestimmen des Ansichtskontextes Folgendes umfasst: Ableiten eines Vorsatzes des Benutzers basierend auf den passiven Hinweisen; und Bestimmen des Ansichtskontextes basierend auf dem abgeleiteten Vorsatz.

9. Verfahren nach einem der vorhergehenden Ansprüche, wobei die potentiellen Ansichtskontexte ferner einen zweiten Übersichtskontext (500) beinhalten, in dem die wichtigsten Abschnitte des Textinhalts in ihrer ursprünglichen Form angezeigt werden und restliche Abschnitte des Inhalts mit Transparenz angezeigt werden.

10. System zum (100) automatischen Anzeigen von Textinhalten in einem Kontext basierend auf passiven Benutzerhinweisen, umfassend:

> einen oder mehrere Speicher (230);
> einen oder mehrere Prozessoren (220), die mit dem einen oder den mehreren Speichern kommunizieren, wobei der eine oder die mehreren Prozessoren dazu konfiguriert sind, das Verfahren nach einem der vorhergehenden Ansprüche durchzuführen.

11. Nichttransitorisches computerlesbares Medium, das Anweisungen speichert, die von einem oder mehreren Prozessoren ausgeführt werden können, um das Verfahren nach einem der Ansprüche 1 bis 9 durchzuführen.


**Revendications**

1. Procédé d'affichage automatique de contenu textuel dans un contexte sur la base de signaux d'utilisateur passifs, comprenant :

> l'identification, avec un ou plusieurs processeurs (220), des parties les plus importantes du contenu textuel ;
> la détection, avec un ou plusieurs processeurs, de signaux passifs de l'utilisateur (101) ;
> la détermination, avec les un ou plusieurs processeurs, d'un contexte de visualisation sur la base des signaux passifs de l'utilisateur, dans lequel les contextes de visualisation potentiels comportent un premier contexte de vue d'ensemble (400) dans lequel les parties les plus importantes du contenu textuel sont affichées, et un contexte de lecture détaillé (300) dans lequel le contenu textuel est affiché dans son intégralité ; et
> la fourniture, avec les un ou plusieurs processeurs, du contenu textuel à afficher dans le contexte de visualisation déterminé ;
> dans lequel la détection des signaux passifs de l'utilisateur comprend la détection :
>
> > d'une vitesse à laquelle l'utilisateur fait défiler le contenu textuel et,
> > les activités actuelles de l'utilisateur ; et
> > dans lequel une quantité de contenu textuel affiché dans le premier contexte d'aperçu est basée sur la vitesse sur lequel l'utilisateur fait défiler et les activités actuelles de l'utilisateur.

2. Procédé selon la revendication 1, dans lequel l'identification des parties les plus importantes du contenu textuel comprend :

> la génération d'une bibliothèque de mots dans le contenu textuel ; et
> l'attribution d'une valeur d'importance à chaque mot.

3. Procédé selon la revendication 2, dans lequel la valeur d'importance est basée sur au moins l'un d'une fréquence d'apparition du mot ou du sujet du contenu textuel.

4. Procédé selon une quelconque revendication précédente, comprenant également l'attribution d'un score de précision sur la base de la vitesse détectée, dans lequel la détermination du contexte de visualisation étant basée au moins en partie sur le score de précision.

5. Procédé selon la revendication 4, comprenant également le calcul d'un score de visibilité sur la base du score de précision et des parties les plus importantes identifiées.

6. Procédé selon l'une quelconque des revendications précédentes, dans lequel la détection des signaux passifs de l'utilisateur comprend la détection d'un regard de l'utilisateur.

7. Procédé selon la revendication 6, dans lequel la détection du regard comprend la détermination d'une durée pendant laquelle le regard de l'utilisateur est focalisé sur le contenu textuel.

8. Procédé selon l'une quelconque des revendications précédentes, dans lequel la détermination du contexte de visualisation comprend :

> la déduction d'une intention de l'utilisateur sur la base des signaux passifs ; et

la détermination du contexte de visualisation sur la base de l'intention déduite.

9. Procédé selon l'une quelconque des revendications précédentes, dans lequel les contextes de visualisation potentiels comportent également un second contexte de vue d'ensemble (500), dans lequel les parties les plus importantes du contenu textuel sont affichées dans leur forme d'origine et les parties restantes du contenu sont affichées avec transparence.

10. Système (100) d'affichage automatique de contenu textuel dans un contexte sur la base de signaux d'utilisateur passifs, comprenant :

une ou plusieurs mémoires (230) ;
un ou plusieurs processeurs (220) en communication avec les une ou plusieurs mémoires, les un ou plusieurs processeurs étant configurés pour exécuter le procédé selon une quelconque revendication précédente.

11. Support non transitoire lisible par ordinateur stockant des instructions exécutables par un ou plusieurs processeurs pour exécuter le procédé selon l'une quelconque des revendications 1 à 9.

Fig. 1

Fig. 2

**Client Device 160**
Processor 262
Data 263
Instructions 264
Display 265
User input 266
Camera 267
GPS 268

Storage 140

Client Device 170

Network 150

100

**Server 110**
Processor(s) 220

**Memory 230**

Data 232

Library of words
Correlation of speed to
user intent score

Instructions 234
- Generate library of words mapped to importance;
- Identify most important words;
- Detect scrolling speed;
- Infer user intent based on scrolling speed;
- Determine viewing context based on inferred intent
- Provide content for display in one of overview context showing only most important words, or detailed context showing all words

EP 3 785 102 B1

was fun last Saturday.

**Restaurant C** ☆☆☆☆☆

**"Awesome"** (Contributor 1) ☆☆☆☆☆

I come here with my family all the time. They have the best salads. The last time we went I ordered the kale salad and it was really good. Excellent service.

**"Great Service"** (Contributor 2) ☆☆☆☆☆

Went with friends the other day and was surprised with how fast the food came. It was delicious. This place has a great atmosphere. I would highly recommend.

**"Kind of just meh..."**
(Contributor 3) ☆☆☆☆☆

Let me just start by saying that I used to love this place but lately it seems like the bread is a little stale. I ordered a sandwich and I wasn't really that impressed. I might go back at some point but I'm not in a big hurry. Maybe they will turn it back around.

**Restaurant C**

**"Awesome"**

salads

service

fast          delicious
atmosphere          recommend

stale

Fig. 3

EP 3 785 102 B1

Fig. 4

**Fig. 5**

## Library

| Word | Importance |
|------|------------|
| atmosphere | 1.0 |
| service | 1.0 |
| salads | .99 |
| fast | .98 |
| delicious | .92 |
| recommend | .86 |
| stale | .85 |
| awesome | .82 |
| ⋮ | |
| and | 0.0 |
| the | 0.0 |
| it | 0.0 |
| I | 0.0 |

Fig. 6

Fig. 7

800

```
┌─────────────────────────────────┐
│  Generate library of words mapped to  │ ～ 810
│            importance            │
└─────────────────────────────────┘
                 │
                 ▼
┌─────────────────────────────────┐
│    Identify most important words    │ ～ 820
└─────────────────────────────────┘
                 │
                 ▼
┌─────────────────────────────────┐
│      Detect passive cues of user      │ ～ 830
└─────────────────────────────────┘
                 │
                 ▼
┌─────────────────────────────────┐
│  Infer user intent based on passive cues  │ ～ 840
└─────────────────────────────────┘
                 │
                 ▼
┌─────────────────────────────────┐
│   Determine viewing context based on   │ ～ 850
│           inferred intent           │
└─────────────────────────────────┘
                 │
                 ▼
┌─────────────────────────────────┐
│  Provide content for display in determined  │ ～ 860
│          viewing context          │
└─────────────────────────────────┘
```

Fig. 8

**EP 3 785 102 B1**

**Patent documents cited in the description**

- US 20150212712 A
- US 2004080532 A